(19) Europäisches Patentamt
European Patent Office
Office européen des brevets

(11) Publication number: **0 125 142**
**A2**

# (12) EUROPEAN PATENT APPLICATION

(21) Application number: **84303121.2**

(22) Date of filing: **09.05.84**

(51) Int. Cl.³: **C 01 B 17/027**
C 01 B 13/32

(30) Priority: **10.05.83 DK 2071/83**

(43) Date of publication of application:
**14.11.84 Bulletin 84/46**

(84) Designated Contracting States:
**BE DE FR GB IT NL**

(71) Applicant: **Haldor Topsoe A/S**
**Nymollevej 55**
**DK-2800 Lyngby(DK)**

(71) Applicant: **A/S NIRO ATOMIZER**
**No. 305 Gladsaxevej**
**DK-2860 Soeborg(DK)**

(72) Inventor: **Schoubye, Peter Carl Sehestedt**
**9, Laerkevaenget**
**DK-2970 Horsholm(DK)**

(72) Inventor: **Hansen, Ove Emil**
**261, Skovgards allé**
**DK-3500 Vaerlose(DK)**

(74) Representative: **Pett, Christopher Phineas et al,**
**Frank B. Dehn & Co. European Patent Attorneys Imperial House 15-19 Kingsway**
**London WC2B 6UZ(GB)**

## (54) A process for the regeneration of mixtures containing sulphuric acid and metal sulphates into sulphuric acid and metal oxides.

(57) A process for the substantially complete regeneration into sulphuric acid and metal oxides of a raw material comprising a concentrated solution or slurry of metal sulphates containing sulphuric acid and/or of a filter cake of metal sulphates containing sulphuric acid, in which process the metal sulphates are decomposed at 700-1200°C to form metal oxides and a $SO_2$-containing gas which is subsequently converted into sulphuric acid, characterized by the steps of

(a) adjusting the raw material to a content of at least 60% by weight of $H_2SO_4$ in the liquid phase, calculated on the assumption that the metal sulphates contain 1 molecule of water of crystallization per metal atom, and at the same time ensuring that the total amount of water, calculated as the sum of water present in the components of the material obtained by a subsequent neutralization step and the water formed by the complete neutralization of the sulphuric acid, does not exceed 5 molecules of water per metal atom,

(b) neutralizing the material obtained in step (a) approximately completely by the addition of metal oxides recycled from step (f) below, the amount added being approximately equivalent to the amount of acid in the material,

(c) granulating and drying the product of step (b),

(d) heat-decomposing the granulated product optionally in the presence of a reduction agent to form metal oxides and $SO_2$,

(e) conducting the $SO_2$-containing gas from the decomposing step (d) to a sulphuric acid plant for conversion into sulphuric acid.

(f) recycling part of the oxides formed in step (d) to neutralizing step (b), and

(g) recovering the remainder of the oxides formed in step (d).

EP 0 125 142 A2

Croydon Printing Company Ltd

# A PROCESS FOR THE REGENERATION OF MIXTURES CONTAINING SULPHURIC ACID AND METAL SULPHATES INTO SULPHURIC ACID AND METAL OXIDES.

The present invention relates to a process for the complete regeneration into sulphuric acid and metal oxides of a raw material consisting of a concentrated sulphuric acid-containing solution or slurry of metal sulphates or of a sulphuric acid-containing filter cake of metal sulphates.

When leaching ilmenite ($FeTiO_3$) or $TiO_2$-slag with sulphuric acid with a view to preparing titanium dioxide, ($TiO_2$) large quantities of a salt- and sulphuric acid-containing spent acid are formed, normally containing:

| | |
|---|---|
| 20-24% | $H_2SO_4$ |
| 10-14% | metal sulphates, composed of: |
| 3-8% | $FeSO_4$ |
| 1-4% | $MgSO_4$ |
| 0.5-3% | $Al_2(SO_4)_3$ |
| 1-2.5% | $TiOSO_4$ |
| 0.1-0.5% | $VOSO_4$ |
| 0.1-0.3% | $Cr_2(SO_4)_3$ |
| 1-3% | other sulphates |

Hitherto this spent acid has been dumped, sometimes after neutralization with lime.

During recent years, efforts have been made, particularly in Western Germany, to reduce the extent of the pollution caused by this dumping by partially evaporating the spent acid whereby the metal sulphates are entirely or partially precipitated from the solution.

By evaporating the solution to an acid strength of up to about 30% $H_2SO_4$, up to half of the iron sulphate content of the solution crystallizes and can be isolated as $FeSO_4,7\ H_2O$ which can be sold and used for water purification, for instance of sewage.

By further evaporation up to about 70% $H_2SO_4$ in the liquid phase, the major part of the sulphates are precipitated from the solution. By filtration of this socalled acid sludge a filter cake often called filter salt is obtained which consists of a mixture of mainly monohydrates of the sulphates present and which moreover contains some sulphuric acid, plus a liquid phase containing 70% of $H_2SO_4$ and up to 2-3% of sulphates and particularly sulphates of Cr and V. This 70 percent sulphuric acid, when obtained leaching ilmenite, may be recycled to the leaching process, although this to some degree will reduce the yield of $TiO_2$ and may reduce the quality of the $TiO_2$ pigment because of the content of notably V and Cr in the acid. Recycling of 70% $H_2SO_4$ is not possible when leaching $TiO_2$-slag which requires the use of highly concentrated sulphuric acid.

The filter salt, however, still represents a serious pollution problem because of its content of free sulphuric acid, $FeSO_4$, acid sulphates and water-soluble salts of heavy metals concentrated in the filter salt.

A total solution of the pollution problem from the spent acid therefore must also comprise a regeneration of the filter salt into harmless and/or re-usable products, which is most advantageously done by converting it into insoluble metal oxides and sulphuric acid of the highest possible concentration and purity.

From German patent publication No. 2543005 it is known to treat solutions of metal salts in aqueous sulphuric acid, e.g. from the steel industry or $TiO_2$-industry,by adjusting the pH of the solution to 1-5.5, preferably 1-3 by the addition of a calcium compound in order to selectively precipitate calcium sulphate which is separated off and at least partially calcined to form CaS and/or CaO, after which the mother lye is neutralized to a pH of 7-9 by the addition of a calcium compound to precipitate one or more solid metal-containing compounds,

and these are separated off and/or calcined. The calcium compound used to neutralize the mother lye after the first separation may be the product of the final step of the process. The water left is stated to be relatively pure and harmless and may be led away to a recipient whereas the solid residue may be used as filling material for soil or as raw material for other processes.

It is a disadvantage in this process that it requires large amounts of extraneous calcium compounds which will tend to render the process more expensive; moreover the final solid material will contain large amounts of calcium compounds besides compounds of the metals originally present in the spent acid, which will reduce the usefulness of these metal compounds.

The other known methods for processing the spent acid and also comprising the partial or complete processing of salts present in the spent acid are as follows:

Spray-drying of the spent acid at 320-420°C (US patent specification No. 3,713,786), or spray-drying of the concentrated salt slurry obtained after evaporating and possibly crystallizing part of the ferrous sulphate and possibly separating off an approximately 70% $H_2SO_4$ ("The Topsoe-Niro Process for Total Regeneration of Spent Sulfuric Acid", Proceedings of 5th World Sulphur Conference, London, November 1981, and a publication of the same title released simultaneously by the companies Haldor Topsøe A/S and A/S Niro Atomizer). By spray drying, all water and water of crystallization is evaporated off together with all free sulphuric acid, which must be subsequently condensed out of the flue-gas used for the spray drying whereas the salts are isolated as a powder of water-free sulphates which can be subsequently decomposed under consumption of coal and/or fuel oil into metal oxides and $SO_2$ at 700-1000°C in a fluid bed or in a rotary kiln.

By the spray drying method the investment for the spray drying equipment and the subsequent equipment for condensing the acid and purifying the off-gas is a considerable expenditure. Furthermore, considerable quantities of $SO_2$ are often formed during spray drying, especially by partial decomposition of ferrous sulphate, and the powder of metal sulphates formed has a particle size which is much smaller than the optimum size for decomposition in a fluid bed or a rotary kiln.

Another known method is to introduce the filter salt in small amounts directly into existing plants for pyrite roasting together with the pyrite. The heat generated by the roasting of the pyrite with air covers the heat consumption involved in the decomposition of the filter salt into $SO_2$ and metal oxides. The $SO_2$ formed by the roasting of the pyrite as well as the decomposition of the filter salt is converted into concentrated sulphuric acid in the sulphuric acid plant normally attached to the pyrite roasting plant.

By decomposition together with pyrite in a pyrite roasting plant, the pyrite roasting is impeded and it is required that a pyrite roasting plant is available adjacent the $TiO_2$ production plant. The iron oxides produced in the plant will furthermore be contaminated by the other metals contained in the filter salt, which often makes the use of a pyrite roasting plant prohibitive.

A further method involves the direct introduction and decomposition of the filter salt into a coal and/or fuel oil fired rotary kiln.

Direct injection of wet filter salt into a rotary kiln involves big corrosion problems, particularly so when the filter salt has a high content of sulphuric acid; the fuel consumption is high, a considerable dilution of the process gas with false air takes place, and also agglomeration into lumps and hence bad decomposition in the rotary kiln easily takes place.

Finally, it is known to inject a suspension of the filter salt or a more or less preconcentrated spent acid

as a liquid into a specially designed coal or oil fired oven where the liquid is evaporated and the evaporated sulphuric acid is decomposed into $SO_2$ at 900-1100$^{o}$C, after which the metal oxides are separated from the $SO_2$-containing off-gas which is converted into sulphuric acid in an attached sulphuric acid plant.

This method with direct injection of sulphuric acid containing sludge renders the fuel consumption high because the entire water content of the liquid has to be evaporated and heated to the decomposition temperature, and there may be serious corrosion problems in connection with the injection of the liquid into the decomposition plant.

In the processes involving a preconcentration step, the costs of removing water from the spent acid especially increases strongly when removing the $H_2O$-content remaining after the preconcentration to 70% $H_2SO_4$ in the liquid phase, regardless of whether this removal takes place by additional preconcentration, by spray drying or in the decomposition plant, because the water vapour in these methods is evaporated in admixture with sulphuric acid vapour, $SO_3$ and/or $SO_2$, which demands costly equipment for purifying the steam and removing water from the condensed sulphuric acid.

It would thus be desirable to provide a process which eliminates the above disadvantages. We have now developed a process which ensures a substantially complete regeneration of metal oxides and sulphuric acid from a raw material obtained from a spent acid from leaching with sulphuric acid in the titanium dioxide industry, steel industry and similar industries, such raw material being either a solution or slurry (so-called acid sludge) obtained by optimum partial evaporation of water from the spent acid without separating off sulphuric acid, or a filter cake ("filter salt") obtained by a more

complete evaporation of the water and separating off sulphuric acid at a concentration of, e.g., 70% $H_2SO_4$, without the need to add extraneous substances such as lime or other calcium compounds and being suitable for operation in an inexpensive plant with minimum fuel consumption.

According to the present invention we provide a process for the substantially complete regeneration into sulphuric acid and metal oxides of a raw material comprising a concentrated solution or slurry of metal sulphates containing sulphuric acid and/or of a filter cake of metal sulphates containing sulphuric acid, in which process the metal sulphates are decomposed at 700-1200°C to form metal oxides and a $SO_2$-containing gas which is subsequently converted into sulphuric acid, characterized by the steps of

(a) adjusting the raw material to a content of at least 60% by weight of $H_2SO_4$ in the liquid phase, calculated on the assumption that the metal sulphates contain 1 molecule of water of crystallization per metal atom, and at the same time ensuring that the total amount of water, calculated as the sum of water present in the components of the material obtained by a subsequent neutralization step and the water formed by the complete neutralization of the sulphuric acid, does not exceed 5 molecules of water per metal atom,

(b) neutralizing the material obtained in step (a) approximately completely by the addition of metal oxides recycled from step (f) below, the amount added being approximately equivalent to the amount of acid in the material,

(c) granulating and drying the product of step (b),

(d) heat-decomposing the granulated product optionally in the presence of a reduction agent to form metal oxides and $SO_2$,

(e) conducting the $SO_2$-containing gas from the decomposing step (d) to a sulphuric acid plant for conversion into sulphuric acid,

(f) recycling part of the oxides formed in step (d) to neutralizing step (b), and

(g) recovering the remainder of the oxides formed in step (d).

The process according to the invention is not only suitable for processing spent acid from the $TiO_2$-industry, but also for processing sulphuric acid-containing and salt-containing spent acid from other processes such as steel-pickling, where a spent acid of 5-10% sulphuric acid and about 10% ferrous sulphate is formed, or from leaching of other minerals with sulphuric acid. The process is especially advantageous when the spent acid also contains organic or other combustible components that will be contained in the granulate and therefore during the decomposition will act as fuel for the decomposition process, thus reducing the need for extraneous fuel.

We have surprisingly found that the raw material in admixture with the metal oxides recycled from the decomposition process forms a plastic mass that solidifies on heating to above 80-100°C due to the reaction taking place between the sulphuric acid and the metal oxides. Both prior to and during solidification, the mass may be easily granulated by well-known methods and dried and the granulation may be carried out prior to or during the drying process. According to the invention it is particularly advantageous to either granulate the neutralized material to a particle size of 2-8 mm and dry the particles in a conveyor oven; or to granulate them to a particle size of 0.4-3 mm and dry the particles in a fluid bed.

Other particle sizes and drying apparatus may be used. The particles are surprisingly easily dried in a simple manner into a practically anhydrous state, e.g. by the aid of hot air at 150-500°C. It has been found that the heat content of the drying air may be utilized down to below 100°C without there occurring during the drying process any tendency of the particles to melting,

inconvenient sticking or dust formation, and without any acid vapours or other substances harmful to the environment being given off to the drying air. A condition for this easy drying of the particles is the provision mentioned as part of step (a), viz. that the water content does not exceed 4-5 moles - calculated as the water content of the components, including the water formed by the complete reaction of the sulphuric acid with the metal oxides - per metal atom.

It has been found in experiments on diluting the acid sludge or filter cake with water that an acid strength below 60-65% in the liquid phase causes the neutralization reaction between acid and oxides to proceed so slowly even with heating to 100°C that it is difficult to obtain a consistency in the mixture which allows it to be granulated if at the same time it contains more than 40-50% liquid phase.

The material formed in step (b) rapidly solidifies on heating to above 80-100°C and the particules formed by the drying harden further into a material having a crushing strength of 30-300 kg/cm$^2$ which makes the granulate obtained therefrom very suitable for being decomposed in a fluid bed or rotary kiln which are the preferred types of apparatus for the decomposition process. The heat needed for the drying process may be partly provided by the heat of neutralization generated in step (b).

In the solidified but not yet dried material most or all of the $H_2O$ is assumed to be bound as water of crystallization in the metal sulphates which apparently can bind up to 4-5 moles of $H_2O$ per mole of Me, where Me can be $Fe^{++}$, $Fe^{+++}$, $Mg^{++}$, $Al^{+++}$ and other metal ions, without any melting phenomena during the heating in the drying oven. The reaction for example between $Fe_3O_4$, sulphuric acid and water proceeds according to the equation

$$Fe_3O_4 + 4H_2SO_4 + xH_2O =$$
$$FeSO_4,\ 1/3(x+4)H_2O + Fe_2(SO_4)_3,\ 2/3(x+4)H_2O$$

assuming that $Fe^{++}$ and $Fe^{+++}$ take up the same quantity of water of crystallization per Fe atom. 5 molecules of water of crystallization per Fe atom correspond to x = 11, as is seen from the above.

The material formed and dried in steps (a) to (c) may be easily decomposed practically completely into $SO_2$ and metal oxides at temperatures down to 700°C, particularly when coal is used as fuel and as reducing agent for the reduction of the sulphur contained in the metal sulphates from oxidation state 6 to oxidation state 4, e.g. according to the following reaction equations:

$$3FeSO_4 + C = Fe_3O_4 + 3SO_2 + CO_2$$
$$2MgSO_4 + C = 2MgO + 2SO_2 + CO_2$$
$$2Al_2(SO_4)_3 + 3C = 2Al_2O_3 + 6SO_2 + 3CO_2$$

The water of crystallization released from the metal sulphates by the drying process leaves a pore system in the dried material which probably contributes to an increase in the decomposition rate. The decomposition of the metal sulphates into metal oxides need not necessarily take place in the presence of a reduction agent because it is known that for example iron sulphates and aluminium sulphates can be decomposed completely into metal oxides and a mixture of $SO_2$ and $SO_3$ at 1000-1200°C with excess oxygen.

The heat needed for the decomposition process may be supplied indirectly, e.g. by means of preheated air, but is preferably supplied by combustion of a fuel, e.g. coal dust and/or fuel oil. As will be understood from the preceding paragraph, it is particularly advantageous to use coal, at least as part of the fuel, and to have the coal (or other fuel) present in the oven in which the

decomposition is carried out.

According to a particularly advantageous embodiment of the invention, the material obtained in step (a) is mixed with besides the recycled oxides, a quantity of coal dust corresponding to 1-3 times the amount theoretically needed in the reactions to decompose the metal sulphates completely into metal oxides and $SO_2$ and, as mentioned, at the same time reducing the sulphur contained in the metal sulphates at least partly from oxidation state 6 to oxidation state 4.

In this way, there is obtained an increased reaction rate because there is then formed, under the reaction conditions, a strongly reducing CO-containing atmosphere in the gas film around the particles and in the pores of the particles, which porosity is further increased by the volume left by the coal particles upon oxidation of the coal. The total coal consumption for both reduction and heating of the reactants to the decomposition temperature is about 3 times the consumption for the reduction alone.

The conversion of the $SO_2$-containing gas from the decomposition step into sulphuric acid may take place in any known type of sulphuric acid plant and is quite conventional.

The process of the invention will now be further illustrated by two non-limiting Examples.

Example 1

Spent acid from the preparation of $TiO_2$ from a $TiO_2$-slag is regenerated into sulphuric acid and metal oxides as shown schematically below:

| 1000 kg | SPENT ACID |
|---|---|
| FROM $TiO_2$-SLAG | |
| $H_2SO_4$ | 213.0 kg |
| $H_2O$ | 699.5 " |
| $FeSO_4$ | 34.6 " |
| $MgSO_4$ | 31.9 " |
| $Al_2(SO_4)_3$ | 21.3 " |

↓

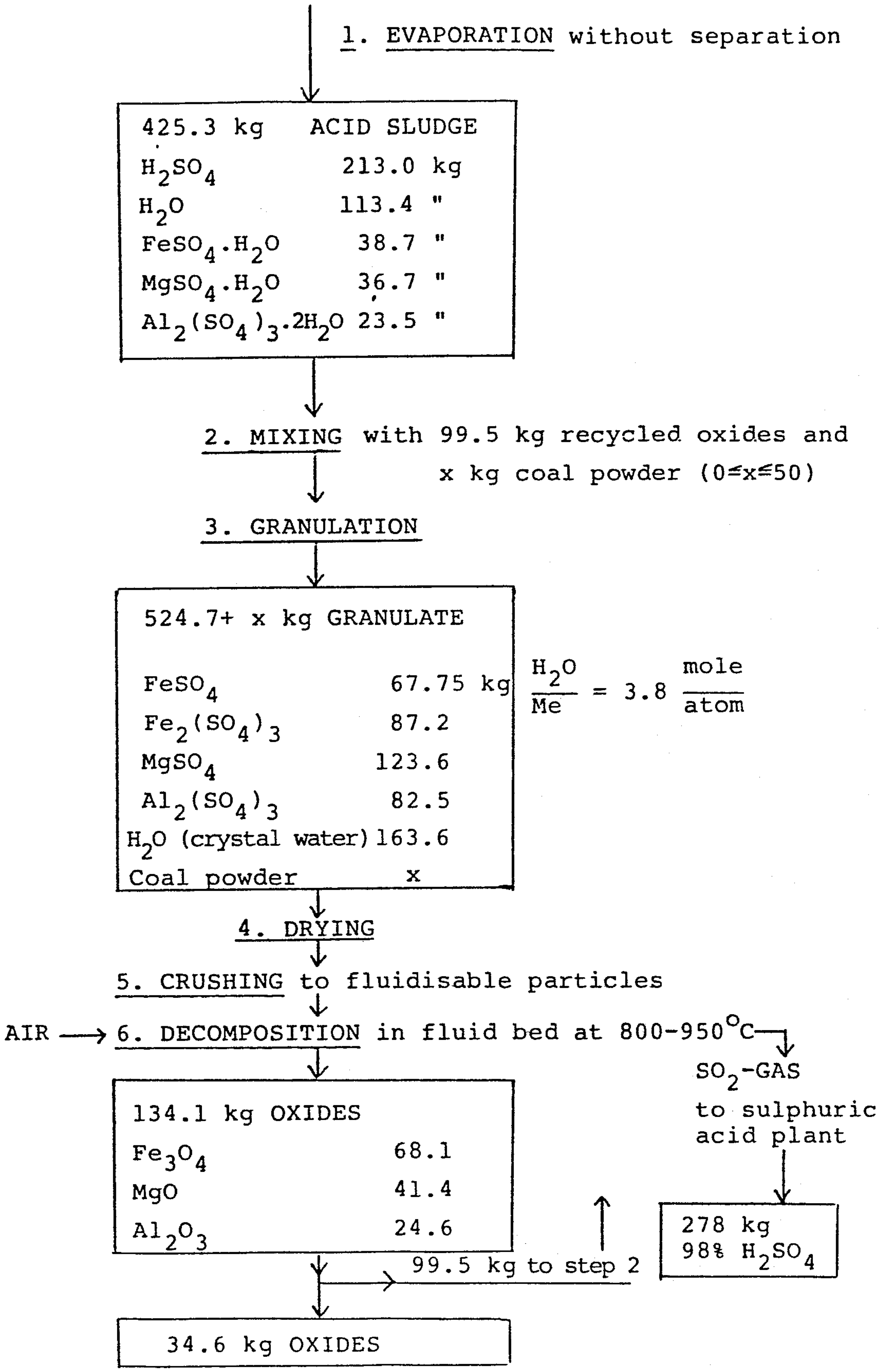
1. EVAPORATION without separation
425.3 kg ACID SLUDGE
$H_2SO_4$ 213.0 kg
$H_2O$ 113.4 "
$FeSO_4 \cdot H_2O$ 38.7 "
$MgSO_4 \cdot H_2O$ 36.7 "
$Al_2(SO_4)_3 \cdot 2H_2O$ 23.5 "
2. MIXING with 99.5 kg recycled oxides and x kg coal powder ($0 \leq x \leq 50$)
3. GRANULATION
524.7+ x kg GRANULATE
$FeSO_4$ 67.75 kg
$Fe_2(SO_4)_3$ 87.2
$MgSO_4$ 123.6
$Al_2(SO_4)_3$ 82.5
$H_2O$ (crystal water) 163.6
Coal powder x
$\frac{H_2O}{Me} = 3.8 \frac{mole}{atom}$
4. DRYING
5. CRUSHING to fluidisable particles
AIR
6. DECOMPOSITION in fluid bed at 800-950°C
$SO_2$-GAS
to sulphuric acid plant
134.1 kg OXIDES
$Fe_3O_4$ 68.1
MgO 41.4
$Al_2O_3$ 24.6
99.5 kg to step 2
278 kg
98% $H_2SO_4$
34.6 kg OXIDES

In such a case, only a comparatively small amount of ferrous sulphate of commercial grade can be separated in connection with the evaporation of the spent acid. Separation of a usable acid is not possible, which means that the entire acid content of the spent acid has to be neutralized and decomposed, which merely means that the decomposition plant with the sulphuric acid plant belonging thereto becomes relatively larger than in the regeneration of spent acid from leaching ilmenite. The acid sludge, which amounts to 42.5% by weight of the crude spent acid, contains 50% of $H_2SO_4$ in the form of a 65% $H_2SO_4$ in which the sulphates are assumed to have been precipitated as monohydrates. In practice, a large part of the sulphates by cooling and standing after the vacuum evaporation precipitate as a gel-like substance of acidic mixed sulphates of unknown composition. However, this has no consequence for the successful application of the process the first step of which is the admixture, without preceding cooling, of the acid sludge coming from the evaporation at a temperature of about 90$^{\circ}$C, with the oxides in a ratio of 425 kg acid sludge per 99.5 kg oxides plus a suitable quantity of coal powder. After 10-30 minutes the mixture hardens to a consistency suitable for granulation, after which the granulate is dried with air in a conveyor oven. The neutralization process continues during the first part of the drying, yet without any evaporation of sulphuric acid into the drying air taking place. Both the heat content in the mixture and the heat of neutralization are utilized for the drying and contribute up to 30% of the heat required for evaporating the water. The dried product is then crushed into particles with sizes suitable for fluidization and decomposed in a fluid bed by known methods. Inert sand or ceramic fluidized particles are added for stabilization while preheated air is distributed into the fluid bed from below and the sulphate particles and coal powder needed for the

heating are fed from above. By decomposition, in such a fluid bed at about 920°C of sulphate particles containing twice the amount of carbon of that needed for the decomposition there is obtained a final product of pulverulent metal oxides having a residual content of typically 0.5-3% of sulphur and 0.2-2 % of carbon.

Example 2

This Example shows how the present process with great advantage can be practiced for the regeneration of spent acid formed by the production of $TiO_2$ from ilmenite. The process is schematically illustrated below:

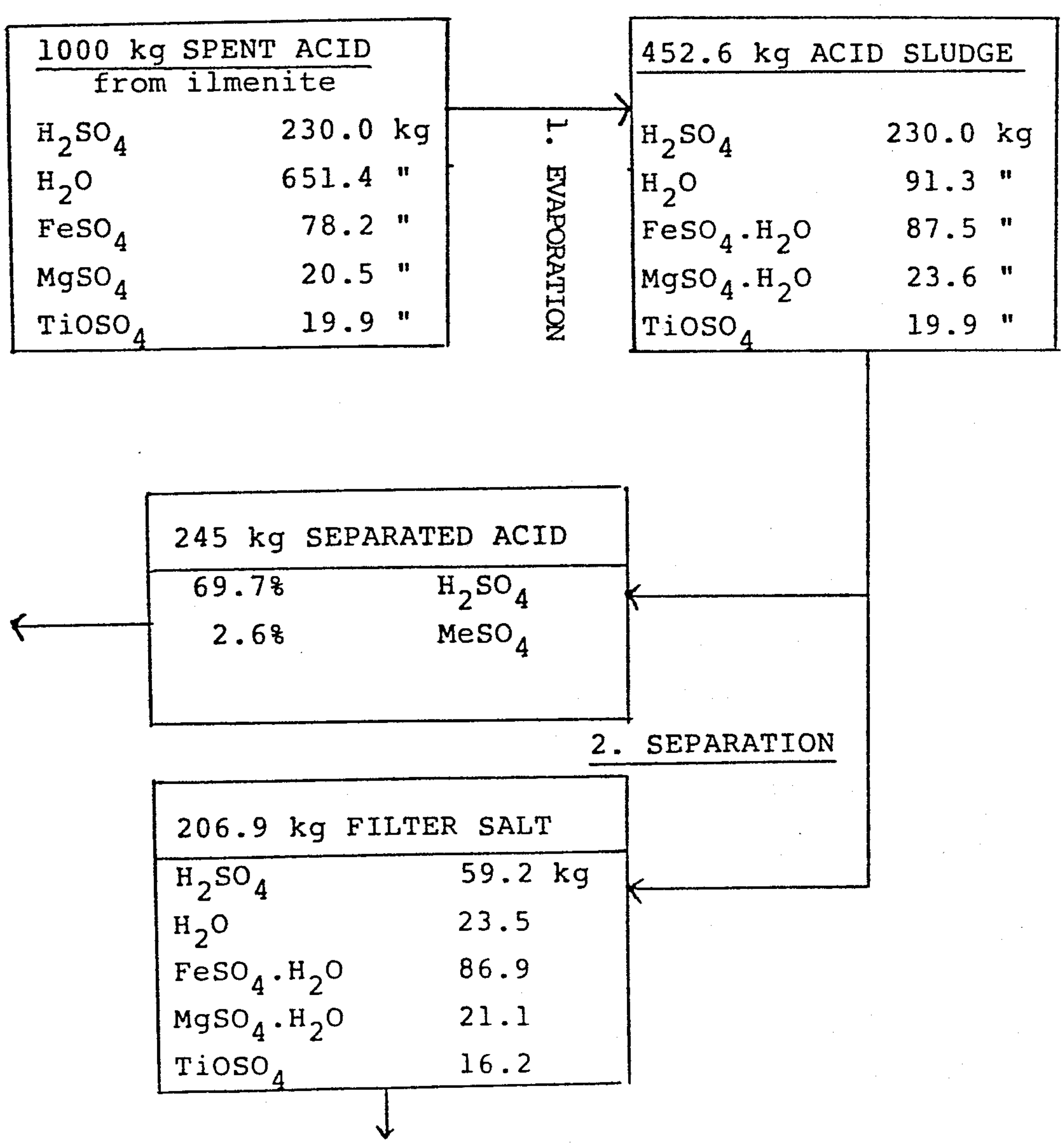

3. MIXING — with 38.85 kg recycled oxides and 10 kg coal powder

4. GRANULATION

| 255.75 kg GRANULATE | |
|---|---|
| $FeSO_4+Fe_2(SO_4)_3$ | 145.74 kg |
| MgSO4 | 31.64 |
| $TiOSO_4+TiO_2$ | 22.05 |
| $H_2O$ (crystal water) | 46.31 |
| Coal powder | 30 |

$H_2O$ ← 5. DRYING

6. CRUSHING to fluidisable particle sizes

AIR → 7. DECOMPOSITION in fluid bed at 800-950°C → $SO_2$-GAS to sulphuric acid plant → 136 kg 98% $H_2SO_4$

| 92.55 kg OXIDES | |
|---|---|
| $Fe_3O_4$ | 68.01 kg |
| MgO | 10.60 " |
| $TiO_2$ | 13.95 |

38.85 kg to step 3

53.70 kg OXIDES

The spent acid is evaporated without any separation of ferrous sulphate to 453 kg of acid sludge per 1000 kg spent acid, the sludge having an acid strength of 70% $H_2SO_4$ in the liquid phase. From this 245 kg of 70% acid containing about 2.6% of metal sulphates are separated off per 1000 kg spent acid. This acid is reused for the ilmenite leaching process whereas the 207 kg of filter salt per 1000 kg of spent acid, which contains 40% acid of 70% strength, is mixed with 39 kg of oxides recycled from the decomposition. The mixture, having already before the neutralization process a consistency allowing

it to be granulated, is granulated and dried with air as described above, after which the dried granulate is crushed and decomposed in a fluid bed.

The water content of the granulate from the two examples above was measured during the air drying thereof. It was found in both cases that all water down to a content of 0.7-1 mole $H_2O$ per metal atom in the granulate was removed at granulate temperatures at or below 140°C. To remove the last water to below 0.1 mole $H_2O$ per mole metal atom, which really is not necessary, the granulate must be heated to 250-300°C.

In both Example 1 and Example 2 it is a substantial advantage that practically all excess heat from the decomposition plant and the sulphuric acid plant belonging thereto can be used for the preconcentration of the spent acid and for the drying of the granulated particles prior to the decomposition process.

CLAIMS

1. A process for the substantially complete regeneration into sulphuric acid and metal oxides of a raw material comprising a concentrated solution or slurry of metal sulphates containing sulphuric acid and/or of a filter cake of metal sulphates containing sulphuric acid, in which process the metal sulphates are decomposed at 700-1200°C to form metal oxides and a $SO_2$-containing gas which is subsequently converted into sulphuric acid, characterized by the steps of

(a) adjusting the raw material to a content of at least 60% by weight of $H_2SO_4$ in the liquid phase, calculated on the assumption that the metal sulphates contain 1 molecule of water of crystallization per metal atom, and at the same time ensuring that the total amount of water, calculated as the sum of water present in the components of the material obtained by a subsequent neutralization step and the water formed by the complete neutralization of the sulphuric acid, does not exceed 5 molecules of water per metal atom,

(b) neutralizing the material obtained in step (a) approximately completely by the addition of metal oxides recycled from step (f) below, the amount added being approximately equivalent to the amount of acid in the material,

(c) granulating and drying the product of step (b),

(d) heat-decomposing the granulated product optionally in the presence of a reduction agent to form metal oxides and $SO_2$,

(e) conducting the $SO_2$-containing gas from the decomposing step (d) to a sulphuric acid plant for conversion into sulphuric acid,

(f) recycling part of the oxides formed in step (d) to neutralizing step (b), and

(g) recovering the remainder of the oxides formed in step (d).

2. A process according to claim 1, characterized in that in step (c), the neutralized material of step (b) is granulated to a particle size of 2-8 mm and dried in a conveyor oven.

3. A process according to claim 1, characterized in that in step (c), the neutralized material of step (b) is granulated to a particle size of 0.4-3 mm and dried in a fluid bed.

4. A process according to any one of claims 1 to 3, characterized in that the heat decomposition process of step (d) is carried out in a rotary kiln.

5. A process according to any one of claims 1 to 3, characterized in that the heat decomposition process of step (d) is carried out in a fluid bed, optionally after crushing the granulated, dried material.

6. A process according to any one of claims 1 to 5, characterized in that the heat needed for the heat decomposition process of step (d) is generated by combusting a fuel in the oven in which the decomposition is carried out.

7. A process according to claim 6, characterized in that in step (b) the material obtained in step (a) is mixed with, besides the recycled oxides, coal powder in an amount of 1-3 times that theoretically required to decompose the metal sulphates to metal oxides and $SO_2$, the sulphur contained in the metal sulphates at the same time being reduced from oxidation state 6 to oxidation state 4.

8. A process according to any one of claim 1 to 7, characterized in that a spent acid, obtained by leaching ilmenite with sulphuric acid to form $TiO_2$, said spent acid containing aqueous sulphuric acid and metal sulphates, is evaporated to an acid sludge having a concentration of $H_2SO_4$ in its liquid phase of 65-75%, the acid sludge is separated into a liquid sulphuric acid product of approximately the same concentration of $H_2SO_4$ and a low

concentration of metal sulphates, and a filter cake containing aqueous sulphuric acid of about the same concentration of $H_2SO_4$ and a high concentration of the metal sulphates, and then this filter cake is subjected to steps (a) to (g) as defined in claim 1.

9. A process according to any one of claims 1 to 7, characterized in that, a spent acid, obtained by leaching $TiO_2$-slag with sulphuric acid to form $TiO_2$, said spent acid containing aqueous sulphuric acid and metal sulphates, is evaporated to a content of $H_2SO_4$ of at least 60% by weight in the liquid phase, and then subjected to steps (a) to (g) as defined in claim 1.